# EUROPEAN PATENT APPLICATION

(11) **EP 2 644 501 A2**
(43) Date of publication of application: **02.10.2013**
(21) Application number: 13160718.6
(22) Date of filing: 22.03.2013
(51) Int. Cl.: B64C 27/00

(54) **Cable cutting device for aircraft**

(30) Priority: 28.03.2012 US 201261616476 P
(71) Applicant: Magellan Aerospace Limited, Mississauga Ontario M9B 3R8 (CA)
(72) Inventor: Kosie, Andrew, Winnipeg, Manitoba R3C 4H8 (CA); Burgess, Ronald Duncan, Winnipeg, Manitoba R3R 2G8 (CA)
(74) Representative: Dempster, Benjamin John Naftel

(57) **Abstract**

The invention disclosed relates to a cable-cutting device for cutting a cable under tension. The device is intended for use in conjunction with aircraft, particularly helicopters, to provide reasonable protection from cable strikes. The device includes a main body carrying in a bottom recess a pair of co-acting cable-cutting edges (10, 12) arranged at a suitable angle to produce a wedge-like mechanical advantage to at least partially cut a cable so that the cable will fail under moderate tension. The main body is formed of a composite material defined by a light weight foam central core and wrappings of carbon fiber fabric infused by a resin where the blades are molded into the walls of the recess.

## Description

This application claims the benefit under 35 USC 119 (e) of Provisional Application 61/616476 filed March 28 2012.

This invention relates to a cable cutting device for attachment to an aircraft for the purpose of cutting wires if inadvertently impacted by the aircraft during flight, otherwise often known as a "wire strike device".

### BACKGROUND OF THE INVENTION

One example of a device of this type is shown in US patent 4,215,833 (Chan) issued August 5th 1980 assigned to Canadian National Defence. This shows a cable-cutting device for an aircraft, and in particular a cable-cutting device for protecting the main rotor mast and associated linkages of a helicopter from cable strikes. The device can also be used on fixed wing aircraft.

The device operates by cutting a cable under tension and includes a main body with a base for mounting on the aircraft at a suitable location adjacent to the front nose of the aircraft. From the base the body extends forwardly and away from the aircraft to a tip of the body spaced away from the aircraft and a front edge of the body extending from the tip toward the base. The front edge acts for guiding the cable as the aircraft moves forwardly toward a pair of stationary co-acting cable-cutting edges or blades arranged adjacent the base so that the cable sliding along the front edge drops into the space between the blades for the cutting action.

The blades are mounted at a suitable angle relative to one another to produce a wedge-like mechanical advantage while presenting a fresh cutting edge to a cable as it simultaneously engages and advances between said cable-cutting edges toward a junction of said cable-cutting edges.

The device in the patent above operates by using the concept that a distance between the point of engagement of the cable with one of the cable-cutting edges and the junction of said cable-cutting edges, that is the distance of travel of the cable along the edges, is sufficient to permit at least partial cutting of the cable before it reaches the junction so that the cable will then fail under moderate tension.

This device has been found to be very satisfactory and operates effectively in action to cut wires where necessary in an impact with a flying aircraft. The design has been in use for more than 30 years and has required little modification.

This device employs only the energy of motion of the aircraft to accomplish the cable cutting. The mechanical advantage built into the above-described co-acting cutting edges has the effect of multiplying the cutting force, that is, for every unit of impact force applied there will be a significantly increased cutting force generated.

Other competitive devices have been developed often including different techniques for effecting the cutting action but many of these have not been commercially successful.

Up to now the use of two converging stationary blades has been found to provide a totally satisfactory cutting action which has lead to the adoption of this system in most commercial products.

There remains however the necessity to continue making ongoing improvements to the product.

### SUMMARY OF THE INVENTION

According to one aspect of the invention there is provided an apparatus arranged for mounting on an aircraft for cutting a cable under tension when impacted by the aircraft during flight comprising:
a main body for mounting on the aircraft at a suitable location adjacent to the front nose of the aircraft;
the main body having a base for attachment to a suitable structural component of the aircraft;
the main body being shaped to define an arm extending outwardly and forwardly from the base to a tip at a position spaced outwardly from the base;
the main body having a leading front surface extending from the tip toward the base for guiding movement of the cable toward the base as the aircraft moves forwardly;
the main body having a trailing rear surface extending from the tip toward the base behind the front edge and a pair of side surfaces interconnecting the front and rear surfaces to form a solid body cantilevered from the base;
the main body defining a recess in the front surface adjacent the base into which recess the cable can enter as it slides along the front edge;
a first blade carried on the main body in the recess at a position outward of the base with a cutting edge of the first blade facing the base;
a second blade carried on the main body in the recess on a side of the recess inward of the first blade with a cutting edge of the second blade facing the first blade;
the first and second blades having the cutting edges thereof facing one another and converging toward a bottom of the recess to provide a cutting action on the cable as it moves toward the bottom of the recess;
wherein the main body is formed of a composite material including at least one layer of fiber reinforcing material, a core material and a resin.

In most cases the main body consists solely of the composite material so as to be unsupported by longitudinally extending metal parts and so that the blades are held in place in the main body without additional metal couplings or supports. However in some cases additional metal elements may be used for localized extra strength.

In most cases the core extends longitudinally of the main body fully along the full length with the fiber reinforcing material wrapped around the core so as to define a sandwich construction along the whole length of the body to accommodate the loads of impact with the cable and to transfer those loads though the structure to the base and to the body of the aircraft. However in some cases other composite constructions can be used for all or part of the cantilevered length of the main body.

Typically the blades are molded into the main body without the necessity for other mounting components for a simple light weight construction. However in some cases additional metal elements may be used to provide more effective anchoring of the blades in the composite material.

In order to effectively support the blades in the main body, typically the blades have an opposite edge remote from the cutting edge which opposite edge is recessed into the core with the blades narrower than the core.

Typically the fiber reinforcing material comprises a wrapping around the core of one or more layers of fabric where the fiber reinforcing material comprises a fabric layer which can extend behind the blades and comprises wholly or partly carbon fiber.

Typically the resin is infused in a molding process through the fiber reinforcing material and optionally into the core.

Preferably the blades are two separate blades one molded into the surface of the recess outwardly of the recess and the other molded into the wall of the recess inwardly of the recess. However, other blade configurations can be used.

Preferably the front surface of the main body is chamfered from the side surfaces of the main body to form a leading edge and the main body is narrower in the transverse dimension than in the dimension between the front and rear surfaces for aerodynamics.

Preferably outwardly of the blades the main body is not tapered but is of constant width in the transverse dimension. However at the blades the main body is of greater width in the transverse dimension to receive the molded blades therein.

Preferably for minimum weight, the main body tapers toward the tip in the dimension between the front and rear surfaces.

Proper engineering of the mounting between the base and the aircraft body is required to ensure proper transfer of the considerable loads from a strike to the aircraft. This mounting can take many forms depending on the construction of the aircraft. In many cases the base includes fastener members such as nuts, reinforcing sleeves and other metal components which are molded into the main body at the base for mounting on a support member of the aircraft.

In many cases the base includes a slot in a bottom surface thereof defining two walls on respective sides of the slot and insert sleeve members are molded into the main body at the walls transverse to the slot for mounting the slot on a support rib of the aircraft. This construction has been found to ensure sufficient transfer of the loads to the aircraft where the rib mounting is also connected to the aircraft airframe

To obtain the best cutting action, the blades typically define a pair of stationary co-planar co-acting cable-cutting edges arranged at a suitable angle to each other to produce a wedge-like mechanical advantage while presenting a fresh cutting edge to a cable as it simultaneously engages and advances between said cable-cutting edges toward the junction of said cable-cutting edges, the distance between the point of engagement of said cable with said cable-cutting edges and the junction of said cable-cutting edges being sufficient to permit at least partial cutting of said cable, due to the energy of motion of the aircraft, before it reaches said junction so that the cable will fail under moderate tension.

Preferably the cable-cutting edges are at an angle of about 5° to 10° to each other and the distance is about 2 inches to 4 inches.

Preferably there is provided an extension of each cutting edge extending forwardly of its respective edge with at least one of the extensions being flared outwardly from a line bisecting the angle between the edges and at a much greater angle to the bisector so as to define a continuous guide path to direct a cable into engagement with the co-acting cable cutting edges.

This arrangement described herein therefore provides an alternative to the current cutter assemblies used in helicopter cable cutters. The cable cutter currently uses a multi-piece mechanically fastened assembly of metallic design. The cutting blades are mechanically fastened in place at a suitable angle to cut cables when hit at a moderate speed causing them to fail in tension. The new cutter is a one piece composite design and has molded in blades and inserts. The cutter is manufactured using a liquid resin infusion process with graphite/carbon fiber face sheets surrounding a custom geometry low density foam core. The molded inserts provide attachment points for struts to support the cutter and secure it to the helicopter. The new design will provide a significant weight reduction not achievable with the current design while providing the same degree of protection from cables struck during flight.

### BRIEF DESCRIPTION OF THE DRAWINGS

One embodiment of the invention will now be described in conjunction with the accompanying drawings in which:
In the drawing which serves to illustrate embodiments of the invention,
   Figure 1 is a side elevation, partly in section of the fore-end of a helicopter including cable-cutting devices mounted thereon,
   Figure 2 is a side elevation of one embodiment of a cutting device according to the invention,
   Figure 3 is a front elevation of the device of Figure 2,

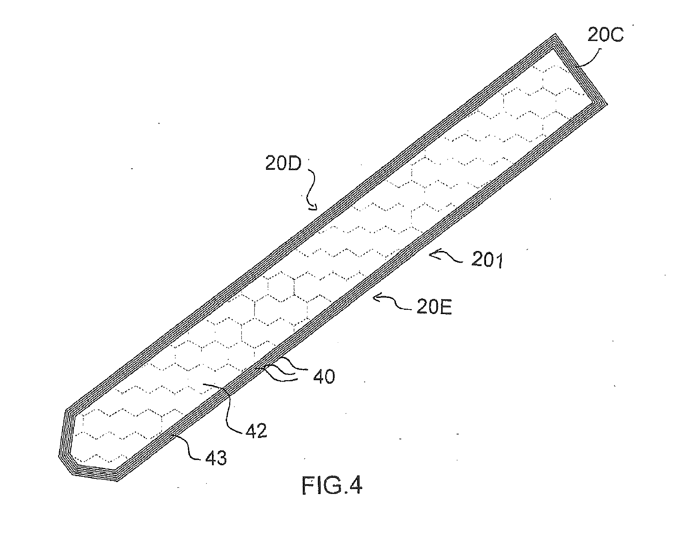

   Figure 4 is a cross-sectional view along the lines 4-4 of Figure 2,

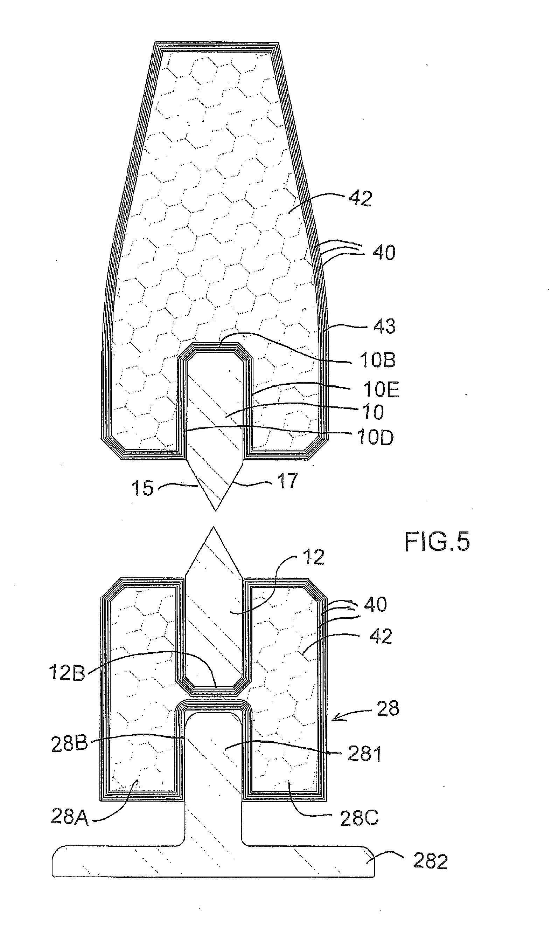

   Figure 5 is a cross-sectional view along the lines 5-5 of Figure 2.
   Figure 6 is an isometric view of the base of the device of Figure 2.

In the drawings like characters of reference indicate corresponding parts in the different figures.

### DETAILED DESCRIPTION

Referring to Figure which 1 is taken from US Patent 4,315,833, the disclosure of which can be referenced for further information, the cable-cutting device comprises a pair of stationary co-acting cable-cutting edges 10 and 12 arranged at a suitable angle, such that a fresh cutting edge is presented to a cable 14 as it engages and advances between cable-cutting edges 10 and 12 toward the junction thereof.

The edges 10 and 12 are arranged in the same vertical plane. If the edges are off-set, problems could occur as a result of higher stress levels which could cause structural damage to the aircraft.

The cutting edges 10 and 12 are triangular in section, the sides of which 15 and 17 are disposed at an angle in the range 45 to 75 degrees.

The wedge-like cutting action developed by converging blades of this configuration and material, symmetrically disposed about the plane of convergency, i.e. the plane containing a line bisecting the apex angle, is considered to provide the optimum combination of "sharpness" and strength required to cut through the cables most prevalently used by hydro-electric, telephone and military authorities as will be apparent hereinafter.

A cable 14 will simultaneously engage the co-acting cutting edges 10 and 12. The perpendicular distance from the base to the apex of the triangle, preferably about three inches represents a compromise between mechanical advantage and space available.

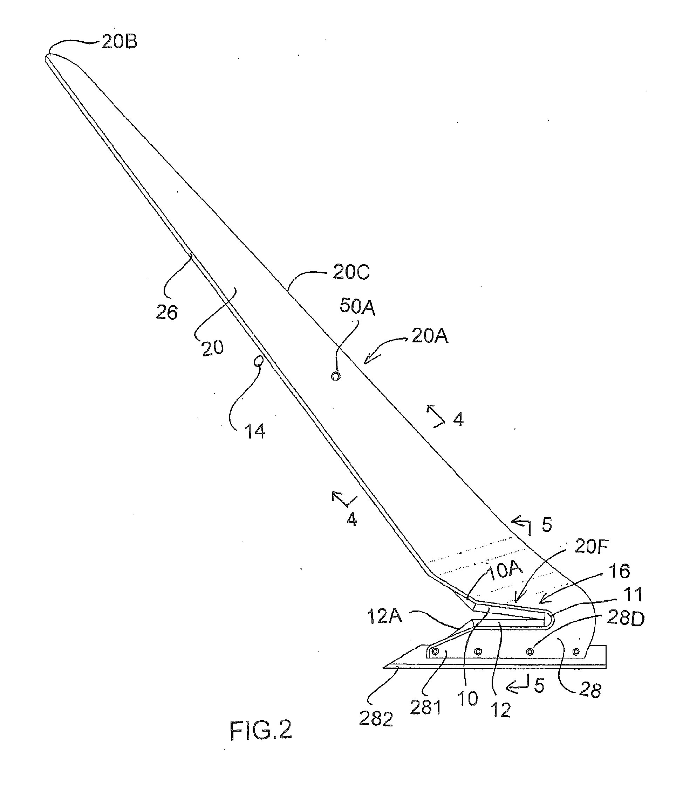

As seen in Figure 2, the cutting edges 10 and 12 are extended further away from the apex of the triangle, to define diverging extensions 10A and 12A, to accommodate and sever large diameter cables up to and including 1.5 inch diameter multi-conductor telephone cables.

These cables are made up of relatively weak materials and are capable of being cut by co-acting extensions 10A and 12A at a much less acute included angle; e.g., 65° is shown on Figure 2. This wider angle portion also functions as a guide to ensure that small strong cables will enter the narrower more effective portion of the cutter between the edges 10 and 12. The extended diverging cutting edges 10A and 12A are also effective for severing cables that, because of their small size or weak construction (e.g. copper or aluminum strands), do not require the wedge-like cutting action but rather are cut by a brief, sliding contact with a single edge.

A cable deflecting member is provided for deflecting a cable which would ordinarily strike the windscreen or main rotor shaft into engagement with the co-acting cable-cutting edges 10 and 12 to sever the cable. The cable deflecting member comprises first and second cable deflecting portions 20, 22. The portion 22 is tied to the existing cockpit structure below the windscreen, fastened to the windscreen center post support 22A following the contour of the windscreen, then curved to run along the roof of the helicopter and terminating at a suitable structural point.

The cable deflecting portion 22 may include an abrasive or cutting edge. The first cable deflecting portion 20 provides protection for the flimsy windscreen center post. It also helps to guide the cable(s) into the mechanical cutter and in the process inflict as much damage to the cable(s) as possible before entering the co-acting cutting edges 10 and 12.

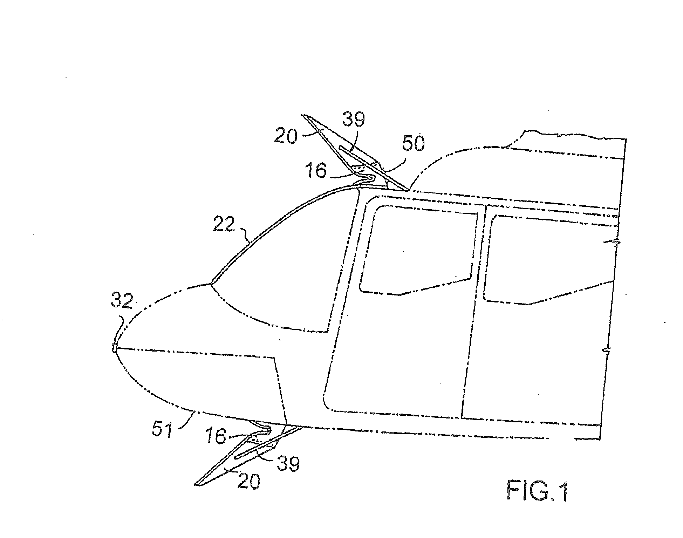

The second cable deflecting portion 20 is rigidly mechanically fastened to the jaw member 16 in a conventional manner as shown in Figure 1. In the embodiment of Figure 2 the deflecting member 20 is an integral part of the centre piece of the jaw member 16. The deflector 20 is thus upstanding from the jaw member 16 and is disposed substantially perpendicular to the plane of the helicopter roof. The element 20 includes a leading cable-deflecting edge 26, which may be shaped or treated to inflict damage to a cable, arranged at an angle of about 45° to the horizontal and of sufficient height above the helicopter roof to contact a cable entering the space above the roof and below the main rotor disc, and to deflect it into engagement with the cutting edges 10 and 12. The edge 26 can include a saw tooth blade mechanically fastened to the deflector by conventional means. If included, the cutting teeth are arranged for normal cutting action in the upward direction so that should the aircraft drop e.g. during attempted cable avoidance the cable may move upwardly on the cutting edge 26 to inflict as much damage as possible to the cable. However in the embodiment as shown this is not included. It will be noted that a smooth transition from the cable deflecting edge 26 to the cable-cutting edge 10 is provided..

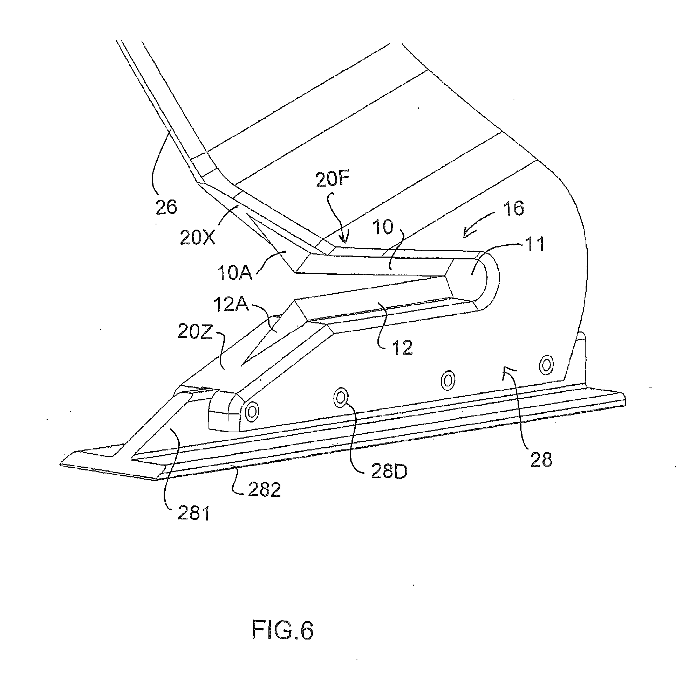

As thus seen in Figure 2, additional support for the upstanding deflector element 20 is provided by a support plate or base 28 rigidly fixed to the helicopter roof. The leading separate cutting edge portions 10A and 12A diverge substantially from each other to allow for larger diameter cables and to facilitate entrance of a cable between the more efficient co-acting cable cutting edges 10 and 12. These extend only a short distance within the recess 20F containing the blades 10 and 12 into the diverging surfaces 20X and 20Z of the recess so as to terminate before the base 28 and before the leading edge 26. The blade sections 10A and 12A also taper in height along the surfaces 20X and 20Z as shown best in Figure 6.

By way of further explanation, the 45° angle of the deflecting element 20 to the horizontal is a compromise. Ideally, the element 20 should be arranged at a smaller angle i.e. about 30°. In operation, with reference to FIG. 1, a cable striking the nose of the helicopter above its apex 32 will tend to move up the nose into contact with the first cable deflecting element 22 and subsequently into engagement with the jaw member 16 carrying the cable-cutting edges.

A cable entering the space between the cable-cutting device and the top of the main rotor shaft will strike the cable deflecting portion 20 and be deflected into engagement with the jaw member 16 and with hence the cutting edges. Low strength, small diameter cables are often severed upon contact with the optional abrasive or cutting edges carried by elements 22 and 20 before entering the jaw member 16.

As shown in Figure 1, a similar cutter assembly is installed on the underside of the helicopter to reduce the hazard of cable strikes occurring below the apex of the nose, on the undercarriage and is shown rigidly mechanically fastened to the underside of the nose 51 of a helicopter to protect the skids (not shown) from cable strikes.

The blades thus define a pair of stationary co-planar co-acting cable-cutting edges arranged at a suitable angle to each other to produce a wedge-like mechanical advantage while presenting a fresh cutting edge to a cable as it simultaneously engages and advances between said cable-cutting edges toward the junction of said cable-cutting edges, the distance between the point of engagement of said cable with said cable-cutting edges and the junction of said cable-cutting edges being sufficient to permit at least partial cutting of said cable, due to the energy of motion of the aircraft, before it reaches said junction so that the cable will fail under moderate tension. The cable-cutting edges are at an angle of about 5 to 10 degrees to each other. The distance is about 2 inches to 4 inches.

In accordance with the arrangement shown in the present application, there is provided a device for cutting a cable under tension when impacted by the aircraft during flight. This includes a main body 20 for mounting on the aircraft having a base 28 for attachment to a center rib 281 carried on the aircraft by a base plate 282. The main body 201 is shaped to define an arm 20A extending outwardly and forwardly from the base 28 to a tip 20B at a position spaced outwardly from the base 28. The main body 201 has a leading front surface 26 extending from the tip 20B toward the base 28 for guiding movement of the cable 14 toward the base 28 as the aircraft moves forwardly. The main body has a trailing rear surface 20C extending from the tip 20B toward the base 28 behind the front edge 26 and a pair of side surfaces 20D, 20E interconnecting the front and rear surfaces to form a solid body cantilevered from the base. The main body defines the recess 20F in the front surface 26 adjacent the base 28 into which recess the cable 14 can enter as it slides along the front edge 26.

Cutting blades of the type described above are mounted in the recess 20F and include the first blade 10 carried on the main body in the recess at a position outward of the base 28 with a cutting edge 15, 17 of the first blade 10 facing the base and the second blade 12 carried on the main body in the recess on a side of the recess 20F inward of the first blade with a cutting edge of the second blade facing the first blade. The first and second blades converge toward a bottom of the recess to provide a cutting action on the cable as it moves toward the bottom of the recess. The blades may are two separate elements separately supported in the body leaving an opening or hole 11 at the rear ends of the blades.

In this embodiment the main body is formed of a composite material including at least one layer of fiber reinforcing material 40, a core material 42 for example a light weight stiff material such as foam, and a resin 43 infused through the body in a molding process. The resin is infused through the fiber reinforcing layers 40 and optionally partly into the core 42.

The core 42 extends longitudinally of the main body along the full length to the tip 20B with the fiber reinforcing material 40 in a plurality of layers of fabric formed of carbon fiber wrapped around the core to fully enclose the core.

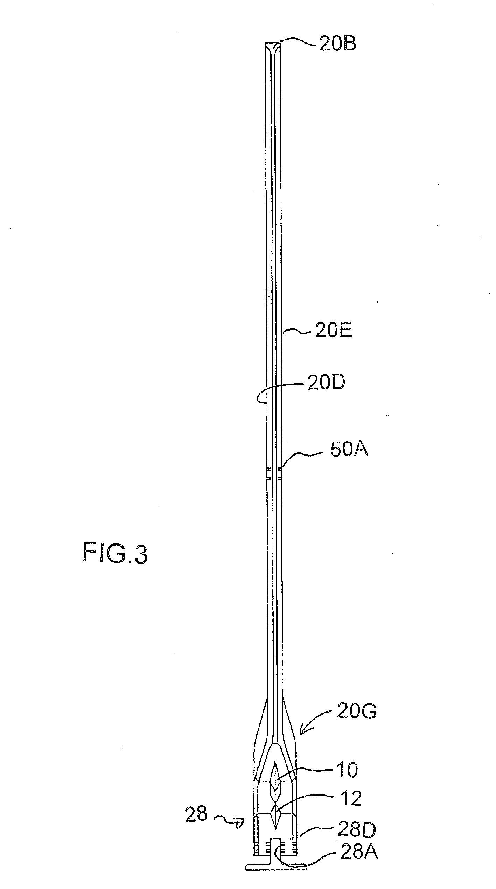

The front surface 26 is chamfered from the side surfaces 20D, 20E of the main body to form a leading edge. The main body 20 is narrower in the transverse dimension than in the dimension between the front and rear surfaces 26, 20C and outwardly of the blades the main body 20 is of constant width in the transverse dimension. At the blades the main body 20 as indicated at 20G is of greater width in the transverse dimension to receive the molded blades 10, 12 therein. The main body tapers toward the tip 20B in the dimension between the front and rear surfaces as visible in Figure 3.

The blades 10, 12 are two separate metal blade elements which are molded into the main body so that each has an opposite edge 10B, 12B remote from the cutting edge which opposite edge which is recessed into the core 42. The blades also have side surfaces 10D, 10E with the blades being narrower than the core so that the side edges 10D, 10E are spaced inwardly from side edge of the core at the base. The blades are thus generally rectangular in cross-section with a sharpened front edge 15, 17. During the lay-up process the fiber reinforcing material layers 40 is laid so that it extends along the sides 10D, 10E and around the rear 10B as indicated at 40B. Thus the blades are two separate blades, one molded into the surface of the recess outwardly of the recess and the other molded into the wall of the recess inwardly of the recess. The blades are held in place by the engagement with the composite material and the resin so that they remain by adhesive contact without any additional metal fasteners.

The base 28 includes a slot 28A in a bottom surface thereof defining two walls 28B, 28C on respective sides of the slot and fastener members or insert members in the form of metal sleeves 28D are molded into the main body at the walls transverse to the slot 28A for mounting the slot on a support rib of the aircraft.

A receptacle 50A is molded into the main body at a position part way along its length to fasten to a brace 50 (Figure 1).

The composite structure including the core, fabric sheets and the resin extend through the full structure of the main body from the tip 20B to the recess 20F and into the base 28. The core is integral and extends through the full structure, the fabric can be cut and laid around the core to fully enclose the core to ensure the strength of the sandwich construction throughout the main body

## Claims

1. Apparatus arranged for mounting on an aircraft for cutting a cable under tension when impacted by the aircraft during flight comprising:
a main body for mounting on the aircraft at a suitable location adjacent to the front nose of the aircraft;
the main body having a base for attachment to a suitable structural component of the aircraft;
the main body being shaped to define an arm extending outwardly and forwardly from the base to a tip at a position spaced outwardly from the base;
the main body having a leading front surface extending from the tip toward the base for guiding movement of the cable toward the base as the aircraft moves forwardly;
the main body having a trailing rear surface extending from the tip toward the base behind the front edge and a pair of side surfaces interconnecting the front and rear surfaces to form a solid body cantilevered from the base;
the main body defining a recess in the front surface adjacent the base into which recess the cable can enter as it slides along the front edge;
a first blade carried on the main body in the recess at a position outward of the base with a cutting edge of the first blade facing the base;
a second blade carried on the main body in the recess on a side of the recess inward of the first blade with a cutting edge of the second blade facing the first blade;
the first and second blades having the cutting edges thereof facing one another and converging toward a bottom of the recess to provide a cutting action on the cable as it moves toward the bottom of the recess;
wherein the main body is formed of a composite material including at least one layer of fiber reinforcing material, a core material and a resin.

2. The apparatus according to any claim 1 wherein the main body consists of the composite material so as to be unsupported by metal parts.

3. The apparatus according to claim 1 or 2 wherein the core extends longitudinally of the main body with the fiber reinforcing material wrapped around the core.

4. The apparatus according to any one of claims 1 to 3 wherein the fiber reinforcing material comprises a wrapping around the core of a plurality of layers of fabric.

5. The apparatus according to any one of claims 1 to 4 wherein the blades are molded into the main body.

6. The apparatus according to claim 5 wherein the blades have an opposite edge remote from the cutting edge which opposite edge which is recessed into the core.

7. The apparatus ac1'cording to claim 6 wherein fiber reinforcing material comprises a layer which extends behind the blades.

8. The apparatus according to any one of claims 1 to 7 wherein the fiber reinforcing material contains carbon fiber.

9. The apparatus according to any one of claims 1 to 8 wherein the blades are two separate blades one molded into the surface of the recess outwardly of the recess and the other molded into the wall of the recess inwardly of the recess.

10. The apparatus according to any one of claims 1 to 9 wherein the front surface is chamfered from the side surfaces of the main body to form a leading edge.

11. The apparatus according to any one of claims 1 to 10 wherein the main body is narrower in the transverse dimension than in the dimension between the front and rear surfaces.

12. The apparatus according to any one of claims 1 to 11 wherein outwardly of the blades the main body is of constant width in the transverse dimension.

13. The apparatus according to any one of claims 1 to 12 wherein the main body tapers toward the tip in the dimension between the front and rear surfaces.

14. The apparatus according to any one of claims 1 to 13 wherein the base includes fastener members which are molded into the main body at the base for mounting on a support member of the aircraft.

15. The apparatus according to any one of claims 1 to 14 wherein the base includes a slot in a bottom surface thereof defining two walls on respective sides of the slot and wherein insert members are molded into the main body at the walls transverse to the slot for mounting the slot on a support rib of the aircraft.
